(19) **Europäisches Patentamt**

**European Patent Office**

**Office européen des brevets**

(11) **EP 0 611 923 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(51) Int Cl.⁶: **F24D 17/00**

(21) Anmeldenummer: **94100889.8**

(22) Anmeldetag: **21.01.1994**

(54) **Verfahren zur Bekämpfung von Legionellen in einer Warmwasserspeicheranlage**

Method for the control of legionnella in hot water installations with an accumulator

Procédé pour la lutte contre la legionnella dans une installation à eau chaude avec un accumulateur

(84) Benannte Vertragsstaaten:
**AT CH DE FR IT LI**

(30) Priorität: **18.02.1993 DE 4305036**

(43) Veröffentlichungstag der Anmeldung:
**24.08.1994 Patentblatt 1994/34**

(73) Patentinhaber: **Müller, Friedrich**
**D-74589 Satteldorf (DE)**

(72) Erfinder: **Müller, Friedrich**
**D-74589 Satteldorf (DE)**

(74) Vertreter: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(56) Entgegenhaltungen:
**EP-A- 0 270 993      DE-A- 4 139 288**
**DE-U- 8 903 316**

**Beschreibung**

Die Erfindung betrifft ein Verfahren zum Betreiben einer Warmwasserspeicheranlage, die einen Warmwasserspeicher aufweist, dessen Inhalt zum einen mit einer energiesparenden Heizung, wie einem Solarkollektor, einer Wärmepumpe oder einem Brennwertkessel, und zum anderen mit einer vergleichsweise dazu weniger energiesparenden Heizung, wie einem Brenner für fossile Brennstoffe oder elektrischer Energie, aufheizbar ist.

In jüngerer Zeit wurde vermehrt das Problem von sogenannten Legionellen (Bakterien) in Trinkwasseranlagen erkannt. Legionellen vermehren sich besonders stark bei Temperaturen zwischen 30 bis 45°C in Leitungswasseranlagen, Warmwasserspeichern etc. Eine Legionellenkonzentration oberhalb gewisser Grenzwerte kann zu ernsthaften Erkrankungen oder auch zum Todesfall führen.

Es ist bekannt, daß die Legionellenkonzentration in Wasser dann abgesenkt werden kann, wenn das Wasser auf eine Temperatur von 60°C oder mehr erhitzt wird.

In einer Vielzahl von Solaranlagen werden Temperaturen von 60°C oder mehr aber nur selten oder zumindest nicht jeden Tag im Warmwasserspeicher erreicht.

Im Stand der Technik sind Warmwasserspeicheranlagen bekannt, welche die oben genannte Ausrüstung aufweisen, also zwei unterschiedliche Wärmequellen (Heizungen), von denen eine energiesparend ist, wie z. B. ein Solarkollektor, während die andere Heizung weniger energiesparend ist, also z.B. ein Brenner für fossile Brennstoffe oder auch ein elektrischer Heizeinsatz.

Die DE 28 40 347 A 1 beschreibt eine Warmwasserspeicheranlage mit einer Zusatzheizung, die nur dann eingesetzt wird, wenn ein billiger Stromtarif vorliegt. Die DE 36 41 726 A 1 spricht zwar das Problem der Bekämpfung von Legionellen an, sieht hierzu jedoch nur vor, daß in einem Brauchwasserspeicher die sogenannte Temperaturschichtung zerstört wird. Der sich aufgrund der Gravitation einstellende Temperaturgradient im Speicher wird durch eine thermostatgesteuerte Zirkulation des Wassers von oben nach unten aufgehoben.

Um Legionellen in Warmwasserspeicheranlagen sicher bekämpfen zu können, soll das Wasser in der Warmwasserspeicheranlage zumindest einmal am Tag für eine relativ kurze Zeitspanne auf mindestens 60°C aufgeheizt werden.

Dies ist als solches bekannt.

Mit Anlagen gemäß dem Stand der Technik könnte dieses Problem dadurch gelöst werden, daß periodisch (in vorgegebenen Zeitabständen) mittels der weniger energiesparenden Heizung das Wasser im Warmwasserspeicher über die Schwellenwerttemperatur (z.B. 60°) erhitzt wird, um sicherzustellen, daß die Legionellenkonzentration hinreichend stark reduziert wird und somit nicht mehr gesundheitsschädlich ist.

Die DE-U 89 03 316 beschreibt einen Warmwasserspeicher mit einer einzigen Heizung. Dort wird dafür gesorgt, daß die Wassertemperatur im unteren Bereich des Warmwasserspeichers nicht für längere Zeitspannen unter einen die Entwicklung von Legionellen ermöglichenden Grenzwert absinkt. Es wird also die Entstehung von Legionellen verhindert. Dieses Verfahren ist relativ energieaufwendig, da in jedem Falle Zeitspannen verhindert werden müssen, in denen die Temperatur des Wassers im Speicher unter einen vorgegebenen Grenzwert abfällt.

Der Erfindung liegt das Ziel zugrunde, ein Verfahren zum Betreiben einer Warmwasserspeicheranlage der eingangs genannten Art anzugeben, mit dem die Energiebilanz über längere Zeiträume verbessert werden kann.

Erfindungsgemäß wird diese Aufgabe dadurch gelöst, daß die Temperaturen des Wassers im Warmwasserspeicher im zeitlichen Verlauf gemessen und z.B. in einem Rechner gespeichert werden, die gemessenen Temperaturen mit einem Schwellenwert (z.B. 60°C) verglichen werden, und dann, wenn die gemessenen Temperaturen im Verlaufe einer ersten Zeitspanne (z.B. 1 Tag) nicht zumindest einmal für zumindest eine zweite, relativ kürzere Zeitspanne (z.B. wenige Minuten) über dem Schwellenwert lagen, das Wasser im Warmwasserspeicher mit der weniger energiesparenden Heizung über den Schwellenwert auf eine Temperatur nachgeheizt wird, bei der die Legionellenkonzentration im Wasser sinkt.

Die Erfindung verwendet auch eine elektronische Steuerschaltung, welche die vorgenannten Funktionen verwirklicht.

Dieser erfindungsgemäßen Lösung liegen folgende Überlegungen zugrunde:

Wird gemäß dem Stand der Technik der Inhalt des Warmwassespeichers vollständig auf die Schwellwerttemperatur von z.B. 60° aufgeheizt, so können Solarkollektoren oder andere energiesparende Wärmelieferanten, die häufig wesentlich niedrigere beitstemperaturen aufweisen, keine Energie mehr an das Wasser im Warmwasserspeicher liefern. Erst wenn wieder Wasser entnommen wird (durch Verbraucher) und im unteren Abschnitt des Speichers kaltes Wasser nachgelaufen ist, können die energiesparenden Wärmelieferanten wieder wirksam eingesetzt werden.

Wenn im Stand der Technik jeweils zu vorgegebenen Zeiten periodisch die Aufheizung über die Schwellwerttemperatur erfolgt, wird nicht berücksichtigt, daß vielleicht wenige Stunden vorher, am gleichen Tage, das Wasser im Warmwasserspeicher aufgrund einer relativ hohen solaren Einstrahlung insgesamt Temperaturen von mindestens 60°C erreicht hatte (auch im unteren Bereich des Speichers). In einem solchen Falle bräuchte gar nicht mehr aufgeheizt zu werden, um für diese Zeitspanne (z.B. 1 Tag) die Legionellen wirksam zu bekämpfen. Die periodische Aufheizung wäre in diesem Falle unnötig und energieverschwendend.

Die oben beschriebene erfindungsgemäße Lösung des Problems vermeidet solche Energieverschwendung.

Eine bevorzugte Ausgestaltung der Erfindung sieht vor, daß das Wasser im Warmwasserspeicher beim Erhitzen über den Schwellenwert mit der weniger energiesparenden Heizung im Warmwasserspeicher und ggf. auch in Leitungsrohren umgewälzt wird, besondere mittels eines Kreislaufes.

Eine andere bevorzugte Ausgestaltung der Erfindung sieht vor, daß die Nachheizung gegen Ende der ersten Zeitspanne liegt.

Die Erfindung ermöglicht, daß die zusätzliche Heizung (Nachheizung) mit der vergleichsweise wenig energiesparenden Heizung zeitlich so gesteuert werden kann, daß sie nur zu einer besonders günstigen Zeit innerhalb eines Überwachungszeitraumes erfolgt. Der Begriff "günstig" ist mit Blick auf das genannte Ziel zu verstehen, d.h. im Sinne einer Verbesserung der Energiebilanz (über längere Zeiträume). Günstig ist besonders ein Zeitpunkt vor einer Zeitspanne, in der regelmäßig viel Heißwasser verbraucht wird und/oder ein Zeitpunkt, zu dem regelmäßig die energiesparende Heizung das Wasser relativ stark aufgeheizt hat.

Weiterhin ermöglicht die Erfindung, daß dann, wenn die für eine Legionellenbekämpfung vorgesehene Nachheizung nicht erforderlich ist, weil die energiesparende Heizung bereits hinreichend hohe Temperaturen in der Warmwasserspeicheranlage erzeugt hat, auf eine Nachheizung verzichtet werden kann.

Weiterhin ist gemäß einer bevorzugten Ausgestaltung der Erfindung (Anspruch 4) ermöglicht, daß die Steuerung der Anlage auch den Umstand berücksichtigen kann, daß unter besonders günstigen Bedingungen zum Zeitpunkt, bei dem eigentlich eine Nachheizung vorgesehen ist, die energiesparende Heizung (z.B. der Solarkollektor) noch bei der Wasseraufheizung wirksam sein kann. In diesem Falle wird Energie dadurch eingespart, daß die Nachheizung so lange verschoben wird, bis die energiesparende Heizung nicht mehr die Temperatur in der Anlage erhöht.

Nachfolgend wird die Erfindung anhand eines Ausführungsbeispieles näher beschrieben.

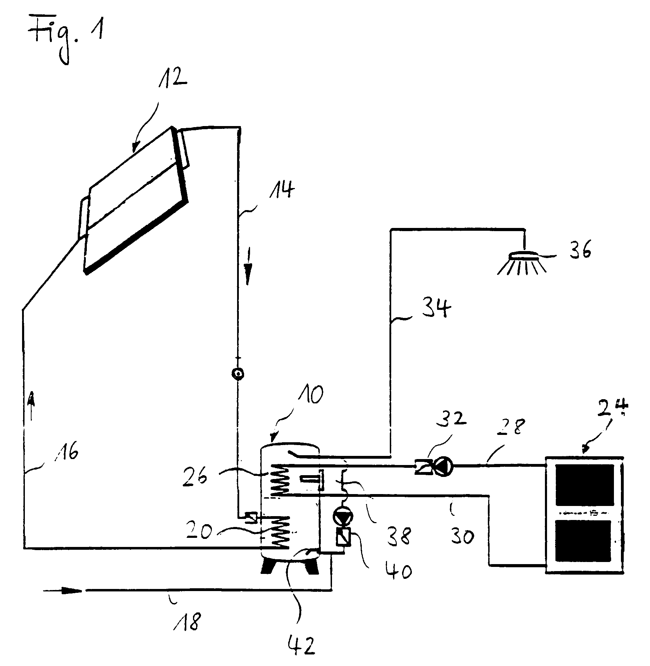

Fig.1 zeigt schematisch eine als solche bekannte Warmwasserspeicheranlage mit einem Warmwasserspeicher 10 und einem Solarkollektor 12. Leitungen 14, 16 bilden in bekannter Weise einen Kreislauf mit einem Wärmeträger. Die mit dem Solarkollektor 12 gewonnene Wärme wird über einen Wärmetauscher 20 in das Wasser im Warmwasserspeicher 10 überführt.

Frisches Kaltwasser wird über eine Leitung 18 in den Warmwasserspeicher 10 eingeführt.

Desweiteren weist die Warmwasserspeicheranlage eine Heizung 24 auf, die weniger energiesparend ist als der Solarkollektor 12, z.B. einen Heizkessel, in dem fossile Brennstoffe verbrannt werden. Die Heizung 24 ist über Leitungen 28, 30 mit einem Wärmetauscher 26 verbunden, so daß mit dem Wärmetauscher 26 Wasser im Warmwasserspeicher 10 ebenfalls erhitzt werden kann. Der Wärmetauscher 26 der weniger energiesparenden Heizung 24 ist im Warmwasserspeicher 10 vertikal oberhalb des Wärmetauschers 20 der energiesparenden Heizung 12 angeordnet.

Eine Pumpe 32 mit Ventil steuert den Kreislauf der Heizung 24 und des Wärmetauschers 26.

Aus dem Warmwasserspeicher 10 führt eine Leitung 34 zu Verbrauchern, von denen beispielhaft eine Dusche 36 dargestellt wird.

Das heiße Wasser wird über die Leitung 34 an einer vertikal oberen Stelle des Warmwasserspeichers 10 entnommen, da die Wärmeschichtung im Warmwasserspeicher 10 einen Temperaturgradienten zur Folge hat.

Von der Entnahmeleitung 34 zweigt eine weitere Leitung 38 ab, die einen Kreislauf zum Umwälzen des Wassers im Warmwasserspeicher 10 bildet. Hierzu wird die Leitung 38 über eine Pumpe und ein zugeordnetes Ventil 40 wieder an einer unteren Stelle in den Warmwasserspeicher 10 zurückgeführt, und zwar über den in Fig.1 gezeigten Rücklauf 42. Bei Betätigung der Pumpe 40 wird also Wasser oben aus dem Warmwasserspeicher 10 entnommen und unten wieder eingeführt, so daß eine Temperaturmischung des Wassers im Warmwasserspeicher 10 erfolgt.

Statt eines einzigen Warmwasserspeichers 10, wie in Fig.1 dargestellt ist, könnte die Erfindung auch mit einer Batterie aus mehreren, nebeneinander angeordneten Warmwasserspeichern (nicht gezeichnet) verwirklicht werden. Bei einer derartigen Anordnung mehrerer Warmwasserspeicher kann die Umwälzung des Wassers und damit die Homogenisierung der Temperatur vorteilhaft dadurch erreicht werden, daß - statt einer Verbindungsleitung von oben nach unten, wie in Fig.1 dargestellt ist - eine Verbindungsleitung vom ersten Speicher der Batterie, oben, zum letzten Speicher der Batterie, unten geführt werden. In der anderen Richtung könnte dann zur Vervollständigung des wassermischenden Kreislaufes eine Leitung über den Warmwasserausgang des letzten Speichers zum Kaltwassereingang des ersten Speichers geführt werden.

In einer anderen Abwandlung des in Fig.1 dargestellten Ausführungsbeispieles, insbesondere mit nur einem Warmwasserspeicher 10, könnte statt des beschriebenen Zirkulationskreislaufes (Leitung 38) auch ein zusätzlicher Wärmetauscher im Speicher unten eingebaut werden, der von der weniger energiesparenden Heizung aufgeheizt wird. Die weniger energiesparende Heizung würde also im unteren Bereich nachheizen und, statt eines Kreislaufes, zum vorgegebenen Zeitpunkt die Speichertemperatur anheben, indem mit ihr der untere Wärmetauscher beheizt wird.

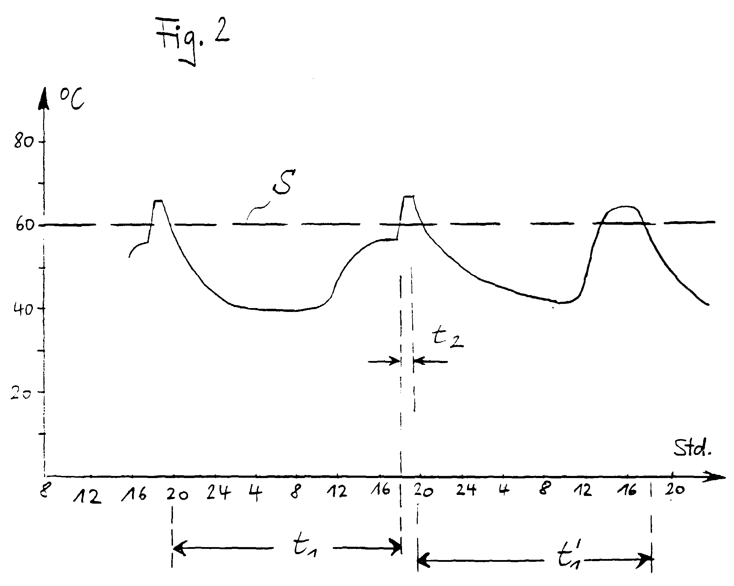

Fig.2 zeigt veranschaulicht das erfindungsgemäße Verfahren zum Betreiben der in Fig.1 dargestellten Warmwasserspeicheranlage. Hierzu zeigt Fig.2 den Verlauf der Temperatur des Wassers im Warmwasserspeicher 10 über der Zeit. Auf der Abszisse ist somit die Zeit in Stunden aufgetragen und auf der Ordinate die Temperatur des Wassers im Warmwasserspeicher 10 in Grad Celsius.

Weiterhin zeigt Fig.2 einen Temperaturschwellenwert S, der hier bei 60°C angesetzt ist, was oben bereits erläutert wurde.

Es wird eine relativ lange erste Zeitspanne $t_1$ von z. B. 1 Tag vorgegeben. Beginnt diese Zeitspanne um 20.00 Uhr, also abends, dann fällt zunächst die Temperatur des Wassers im Warmwasserspeicher 10 ab, weil der Solarkollektor 12 keine Wärme mehr in den Warmwasserspeicher 10 überführt. Das Ausführungsbeispiel gemäß Fig.2 nimmt an, daß im Verlauf des Morgens die Sonneneinstrahlung so ist, daß sich das Wasser im Warmwasserspeicher bis ca. 18.00 Uhr auf etwa 55° erhitzt hat. 18.00 Uhr (im Winter z.B. 16.30 Uhr) ist im Sommer ein Zeitpunkt, bei dem, statistisch gesehen, der Warmwasserverbrauch in typischen Haushalten stark ansteigt. Wenn nun der Rechner, welcher die Warmwasserspeicheranlage und deren Pumpen sowie Ventile und die Heizungen etc. steuert, feststellt, daß in der Zeitspanne $t_1$ die energiesparende Heizung 12 keine Temperatur im Warmwasserspeicher 10 erzeugt hat, die über dem Schwellenwert S lag, dann steuert der Rechner die weniger energiesparende Heizung 24 so, daß in der relativ kurzen Zeitspanne $t_2$ die Temperatur des Wassers im Warmwasserspeicher, und zwar an allen Stellen des Speichers, über 60°C (S) steigt. Die Erhitzung des Wassers im Warmwasserspeicher zu diesem Zeitpunkt (z.B. 18.00 Uhr) hat den Vorteil, daß nicht nur die Legionellen reduziert werden, sondern auch zu einem Zeitpunkt relativ heißes Wasser im Haushalt zur Verfügung steht, an dem es in aller Regel am häufigsten gebraucht wird. Auch hat zu diesem Zeitpunkt (z.B. 18.00 Uhr) die Solaranlage in der Regel die höchste Heizwirkung erzielt, so daß die Nachheizung gering bleiben kann.

Fig.2 zeigt dann den Abfall der Temperatur des Wassers im Warmwasserspeicher im Anschluß an die Zeitspanne $t_2$, nämlich in der weiteren, relativ langen Zeitspanne $t_1'$. In dieser Zeitspanne ist der Solarkollektor 12 so wirksam, daß ohne Einsatz der zusätzlichen Heizung 24 die Temperatur des Wassers im Warmwasserspeicher 10 an allen Stellen für eine hinreichende Zeitspanne über den Schwellenwert S steigt. In diesem Falle ist ein Nachheizen des Wassers mittels der weniger energiesparenden Heizung 24 nicht erforderlich, wie sich aus Fig.2 auch ergibt (Fehlen der kurzen Nachheizperiode $t_2$ im Anschluß an die längere Zeitspanne $t_1'$).

Es wird also die zur Legionellenbekämpfung vorgesehene Nachheizperiode $t_2$ nur dann realisiert, wenn die energiesparende Heizung (Solarkollektor) nicht allein in der Lage war, die notwendigen Temperaturen in der Warmwasserspeicheranlage zu erzeugen.

Weiterhin wird auch dadurch Energie eingespart, daß die zur Legionellenbekämpfung vorgesehene Nachheizzeitspanne $t_2$ an einen Zeitpunkt im periodischen Verhalten des Systems gelegt wird, der kurz vor einer Zeitspanne liegt, in der, statistisch gesehen, relativ viel heißes Wasser verbraucht wird (z.B. 18.00 Uhr abends). Dies hat zur Folge, daß anschließend relativ viel heißes Wasser verbraucht wird (abends und in den Morgenstunden), so daß am nachfolgenden Morgen das Wasser im Warmwasserspeicher 10 relativ kalt ist, so daß der Solarkollektor anschließend mit relativ hohem Wirkungsgrad seine Wärme an das Wasser im Warmwasserspeicher abgibt.

Würde z.B. die Nachheizperiode $t_2$ an eine andere Stelle im periodisch-täglichen Verlauf des Systems gelegt, dann kann dies zur Folge haben, daß die Nachheizung das Wasser im Warmwasserspeicher aufheizt und deshalb der Solarkollektor in dieser Zeitspanne mit geringerem Wirkungsgrad Wärme an das Wasser im Warmwasserspeicher überträgt, als wenn dieses kälter ist.

**Patentansprüche**

1. Verfahren zur Bekämpfung von Legionellen in einer Warmwasserspeicheranlage, die einen Warmwasserspeicher (10) aufweist, dessen Inhalt zum einen mit einer energiesparenden Heizung (12), wie einem Solarkollektor, einer Wärmepumpe oder einem Brennwertkessel, und zum anderen mit einer vergleichsweise dazu weniger energiesparenden Heizung (24), wie einem Brenner für fossile Brennstoffe oder elektrischer Energie, aufheizbar ist, dadurch gekennzeichnet, daß

   - die Temperaturen des Wassers im Warmwasserspeicher (10) im zeitlichen Verlauf gemessen werden,
   - die gemessenen Temperaturen mit einem Schwellenwert (S) (z.B. 60°C) verglichen werden, und
   - dann, wenn die gemessenen Temperaturen im Verlaufe einer ersten Zeitspanne ($t_1$) (z.B. 1 Tag) nicht zumindest einmal für zumindest eine zweite, relativ kürzere Zeitspanne ($t_2$) (z.B. wenige Minuten) über dem Schwellenwert (S) lagen, das Wasser im Warmwasserspeicher (10) mit der weniger energiesparenden Heizung (24) über den Schwellenwert (S) auf eine Temperatur nachgeheizt wird, bei der die Legionellenkonzentration im Wasser sinkt.

2. Verfahren nach Anspruch 1, dadurch gekennzeichnet, daß das Wasser im Warmwasserspeicher beim Erhitzen über den Schwellenwert (S) mit der weniger energiesparenden Heizung (24) im Warmwasserspeicher (10) und ggf. auch in Leitungsrohren umgewälzt wird, insbesondere mittels eines Kreislaufes (38).

3. Verfahren nach einem der Ansprüche 1 oder 2,

dadurch gekennzeichnet, daß die Nachheizung gegen Ende der ersten Zeitspanne ($t_1$) liegt.

4. Verfahren nach Anspruch 3,
dadurch gekennzeichnet, daß die Nachheizung dann zeitlich auf einen späteren Beginn verschoben wird, wenn in ihr bei normalem Beginn auch die energiesparende Heizung das Wasser aufheizen würde.

## Claims

1. A method of controlling legionella in a hot water supply installation comprising a hot water tank (10) the content of which may be heated on the one hand by an energy-saving heating (12), such as a sun collector, a heat pump or a condensing value boiler, and on the other hand by an, in comparison, less energy-saving heating (24), such as a burner for fossil fuel or electrical energy, characterized in that

- the temperatures of the water in the hot water tank (10) are measured as a function of time,
- the temperatures measured are compared to a threshold value (S) (e.g. 60°), and
- if the temperatures measured did in the course of a first period of time ($t_1$) (e.g. one day) not exceed the threshold value (S) at least once for at least a second, relatively shorter period of time ($t_2$) (e.g. a few minutes), the water in the hot water tank (10) is heated additionally by means of the less energy-saving heating (24) above the threshold value (S) to a temperature at which the concentration of legionella in the water is lowered.

2. The method according to claim 1,
characterized in that while heated above the threshold value (S) by the less energy-saving heating (24), the water in the hot water tank (10) is circulated therein, and possibly also in pipes, especially by means of a circulation (38).

3. The method according to claim 1 or 2,
characterized in that the additional heating is effected toward the end of the first period of time ($t_1$).

4. The method according to claim 3,
characterized in that the additonal heating is deferred to a later beginning if during said heating, with the beginning being normal, the energy-saving heating as well would heat the water.

## Revendications

1. Procédé pour combattre les légionnelles dans une installation de réserve d'eau chaude qui présente un réservoir d'eau chaude (10) dont le contenu peut être chauffé d'une part avec un système de chauffage économiseur d'énergie (12) tel qu'un collecteur solaire, une pompe à chaleur ou une chaudière à condensation, et d'autre part par un système de chauffage comparativement moins économiseur d'énergie (24) tel qu'un brûleur de combustibles fossiles ou un système de chauffage à énergie électrique,
caractérisé en ce que

- la température de l'eau du réservoir d'eau chaude (10) est mesurée au cours du temps,
- les températures mesurées sont comparées à une valeur de seuil (S) (par exemple 60 °C), et
- lorsque les températures mesurées au cours d'un premier intervalle de temps ($t_1$) (par exemple une journée) ne sont pas demeurées au moins une fois pendant au moins un deuxième intervalle de temps relativement plus court ($t_2$) (par exemple quelques minutes) au-dessus de la valeur de seuil (S), l'eau du réservoir d'eau chaude (10) est réchauffée avec le système de chauffage moins économiseur d'énergie (24) jusqu'au dessus de la valeur de seuil (S) à une température à laquelle la concentration en légionnelles dans l'eau chute.

2. Procédé selon la revendication 1,
caractérisé en ce que, lors de son chauffage au-dessus de la valeur de seuil (S) avec le système de chauffage moins économiseur d'énergie (24), l'eau du réservoir d'eau chaude est mise en circulation dans le réservoir d'eau chaude (10) et le cas échéant aussi dans des conduites, en particulier au moyen d'un circuit fermé (38).

3. Procédé selon l'une des revendications 1 ou 2,
caractérisé en ce que le réchauffage se situe vers la fin du premier intervalle de temps ($t_1$).

4. Procédé selon la revendication 3,
caractérisé en ce que le début du réchauffage est reporté dans le temps à un instant ultérieur si en commençant à l'instant normal le système de chauffage économiseur d'énergie chauffait aussi pendant la durée du réchauffage.

Fig. 1

Fig. 2